# FASCICULE DE BREVET EUROPEEN

(11) **EP 4 000 008 B1**
(45) Date de publication et mention de la délivrance du brevet: **10.09.2025**
(21) Numéro de dépôt: 20734991.1
(22) Date de dépôt: 03.07.2020
(51) Int. Cl.: G06K 13/08

(54) **SYSTÈME DE LECTURE DE CARTE DE TRANSACTION AVEC VOLET DE PROTECTION**
ZAHLKARTENLESESYSTEM MIT EINER SCHUTZKLAPPE
PAYMENT CARD READING SYSTEM HAVING A PROTECTIVE FLAP

(30) Priorité: 16.07.2019 FR 1908008
(43) Date de publication de la demande: 25.05.2022
(73) Titulaire: Banks and Acquirers International Holding, 75015 Paris (FR)
(72) Inventeur: ALLIROT, Richard, 38700 Corenc (FR); MOREL, Pierre, 26300 Charpey (FR)
(74) Mandataire: LLR
(86) Numéro de dépôt international: PCT/EP2020/068767
(87) Numéro de publication internationale: WO 2021/008895

(56) Documents cités:
- EP-A2- 0 924 633
- FR-A1- 2 837 958
- US-A1- 2006 214 002
- US-A1- 2017 061 259

## Description

### Domaine technique

L'invention se situe dans le domaine des lecteurs de carte de transaction. L'invention a pour objet un système de lecture de carte de transaction destiné par exemple à être monté dans un terminal de lecture de carte de transaction, tel qu'un terminal de paiement ou une machine automatique de vente. Plus particulièrement, l'invention se rapporte à tout type de système de lecture de carte comprenant une fente d'insertion d'une carte de transaction.

### Art antérieur

Divers dispositifs existent pour lire une carte porteuse d'informations, désignée ici sous le terme de carte de transaction, qui comprend une ou plusieurs technologies de communication.

Par exemple, une carte de transaction peut comprendre une bande magnétique sur sa surface. Les données portées par la carte de transaction sont alors inscrites sur la bande magnétique en alternant l'orientation de particules magnétiques intégrées dans la bande. Ces données sont généralement transmises à un dispositif de lecture en faisant glisser la carte dans un lecteur de bande magnétique du dispositif. Une carte de transaction peut également prendre la forme d'une carte à puce ou carte à circuit intégré, qui peut être de type à contact ou sans contact. Dans ce cas, la carte de transaction comprend un circuit intégré capable de traiter des informations. Une telle carte de transaction peut recevoir une entrée qui est traitée via le circuit intégré ou la puce avec une application basée sur celle-ci, puis fournir une sortie. Une carte à puce à contact comprend une zone de contact composée de plusieurs plages de contact. Lorsque la carte à puce à contact est insérée dans un lecteur de carte, ces plages de contact entrent en contact avec des connecteurs électriques du lecteur, qui permettent de lire les informations de la puce et éventuellement d'en écrire en retour. Une carte à puce sans contact (également appelée carte à interface sans contact, ou plus simplement carte sans contact) contient une puce qui communique avec un lecteur de carte via la technologie d'induction RFID. Une carte à puce sans contact ne nécessite que la proximité d'une antenne pour la mise en oeuvre d'une transaction, et n'a généralement pas besoin d'être introduite dans un lecteur.

Une même carte de transaction peut embarquer plusieurs technologies de communication. Par exemple, une même carte de transaction peut comporter une bande magnétique et une puce à contact, ou une puce à contact et une interface sans contact, ou encore une bande magnétique, une puce à contact, et une interface sans contact. Une carte de transaction comportant une bande magnétique et au moins une puce (avec et/ou sans contact) est parfois qualifiée de carte de transaction hybride.

Pour s'accommoder des différences qui peuvent exister entre les technologies de carte de transaction, des constructeurs fournissent différents lecteurs de carte de transaction. Typiquement, un système de lecture de carte de transaction comprend au moins un lecteur de carte de transaction comprenant une fente d'insertion d'une carte de transaction, de manière à rendre le système compatible avec des cartes de transaction de type cartes à puce à contact, très répandues. Pour répondre à des contraintes spécifiques, des constructeurs peuvent également proposer des lecteurs hybrides. Un lecteur hybride est, à l'instar d'une carte de transaction hybride, un lecteur qui supporte au moins deux technologies de communication différentes. Il s'agit par exemple d'un lecteur comprenant des moyens de lecture d'une puce d'une carte à puce à contact et des moyens de lecture d'une bande magnétique d'une carte à bande magnétique. Pour des raisons de compacité et de simplicité d'utilisation, un lecteur hybride ne comporte généralement qu'une seule fente d'insertion, utilisable indifféremment pour l'insertion d'une carte à puce à contact ou d'une carte à bande magnétique : un tel lecteur est en effet conçu pour reconnaître une carte à puce à contact d'une carte à bande magnétique et être à même de basculer sur l'une ou l'autre de ces technologies en fonction de la carte de transaction insérée dans la fente d'insertion. Les lecteurs hybrides peuvent par exemple être intégrés dans des machines automatiques de vente (de type pompe de station essence, distributeurs divers) ou encore dans des distributeurs automatiques de billets (DAB/ATM). Un grand nombre de ces dispositifs automatiques sont accessibles en libre- service, sans surveillance, et/ou installés dans environnements non protégés. Par exemple, il est fréquent qu'une machine automatique de vente de tickets de tramway ou de train soit disponible sur un quai de gare, à l'extérieur, afin de permettre à un utilisateur d'acheter un titre de transport même à des heures tardives ou dans des gares peu fréquentées et sans personnel de vente attitré. La fente d'insertion d'une carte de transaction (typiquement, la fente d'insertion dans laquelle un utilisateur introduit sa carte de paiement pour acheter un bien ou un service) constitue alors généralement un point de faiblesse d'une telle machine automatique, car elle forme une ouverture par laquelle des composants internes et potentiellement sensibles du lecteur (par exemple un connecteur de carte à puce) sont accessibles. Pour protéger ces composants de dégradations volontaires (tels que des actes de vandalisme opportuniste, où un individu tente d'introduire un objet quelconque qu'il a sous la main, autre qu'une carte de transaction, dans la fente d'insertion, par exemple une cuillère à café ou un ticket de métro) ou de dégradations ou dommages involontaires (dues par exemple à l'erreur d'inattention d'un individu qui se trompe et qui insère des pièce de monnaie ou le mauvais ticket dans la mauvaise fente, ou encore dues par exemple à des projections d'eau lors d'intempéries), certains systèmes de lecture de carte de transactions comprennent un volet de protection qui obture la fente d'insertion du lecteur de carte de transaction lorsque celui n'est pas utilisé. Divers mécanismes existent afin que le volet de protection libère l'accès à la fente d'insertion, lorsqu'est détecté un début d'insertion d'une carte de transaction de format attendu dans la fente d'insertion. Ces mécanismes peuvent être au moins partiellement automatisés (en reposant notamment sur l'utilisation de capteurs électroniques pour détecter la présence d'une carte de transaction et/ou sur une ouverture motorisée du volet de protection) ou encore être purement mécaniques (la poussée manuelle exercée sur la carte de transaction pour l'introduire dans la fente d'insertion du lecteur actionne des moyens mécaniques de déverrouillage du volet de protection qui permettent de libérer complètement l'accès à la fente d'insertion).

Les systèmes existants de lecture de carte de transaction intégrant un volet de protection présentent cependant des inconvénients. En effet, l'intégration d'un volet de protection au sein d'un lecteur de carte de transaction fait intervenir de nombreux éléments qui rendent souvent complexe la fabrication et l'assemblage à la fois du lecteur et du volet de protection. Par exemple, dans le cas de mécanismes purement mécaniques, il est souvent nécessaire de prévoir, au sein du boîtier du lecteur, des moyens permettant la rotation du volet de protection autour d'un axe, ainsi que divers ressorts de rappel externes au volet pour rappeler ce volet en position fermée lorsqu'il n'y a plus de carte de transaction insérée dans le lecteur. Il s'agit également de prévoir des moyens permettant le maintien en position de ces ressorts, à la fois dans le boitier du lecteur et sur le volet de protection. Dans le cas de mécanismes partiellement ou tout automatisés, la production et l'assemblage s'avèrent encore plus complexes, en plus d'être plus coûteux, puisque l'intégration du volet de protection implique la présence d'éléments supplémentaires, tels que des capteurs ou un moteur, dont il faut également prévoir l'alimentation électrique. En outre, ces volets de protection automatisés peuvent s'avérer être plus fréquemment sujets à des pannes. Enfin, qu'ils soient automatisés ou non, la présence des nombreux éléments nécessaires à l'intégration d'un volet de protection au sein d'un lecteur est actuellement un facteur limitant quand il s'agit de concevoir un système de lecture de carte de transaction aussi compact que possible. Les documents US2006/214002, EP0924633, US2017/061259 et FR2837958, présentent des dispositifs d'insertion de cartes dans des fentes.

Il existe donc un besoin de système de lecture de carte de transaction avec volet de protection qui ne présente pas au moins certains de ces inconvénients de l'art antérieur.

### Résumé de l'invention

La présente technique permet de résoudre en partie les problèmes posés par l'art antérieur. La présente technique se rapporte en effet à un système de lecture de carte de transaction défini par la revendication 1.

De cette manière, le système de lecture de carte de transaction est de conception plus simple que les systèmes de l'art antérieur. En particulier, moins d'éléments sont nécessaires à l'intégration d'un volet de protection au sein d'un lecteur. La portion élastiquement déformable de l'élément de support permet le passage du volet de la position fermée à la position ouverte et inversement, sans qu'il soit nécessaire d'utiliser des ressorts externes au volet de protection. Une telle conception permet ainsi la mise en oeuvre de systèmes de lecture de carte de transaction plus compacts et plus faciles à assembler que les systèmes de l'art antérieur. En outre, les deux patins de soulèvement sont distants d'une distance sensiblement égale (ou légèrement inférieure) à la largeur d'une carte de transaction de dimension standard destinée à être utilisée conjointement avec le système de lecture de transaction, ce qui permet de mettre en oeuvre une fonction de détection d'une carte de dimension standard.

Dans un mode de réalisation particulier, l'élément d'obturation prend la forme d'une lame au moins partiellement métallique d'épaisseur supérieure à 0,35 mm et l'élément de support monobloc est formé dans une plaque au moins partiellement métallique d'épaisseur inférieure à 0,30 mm.

De cette manière, l'élément de support monobloc et le volet de protection peuvent être produits simplement, à grande échelle et à moindre coût grâce à la mise en oeuvre de techniques connues de découpage, de pliage et d'embossage de plaques métalliques.

Selon une caractéristique particulière de ce mode de réalisation, ledit élément d'obturation comprend deux butées, chaque butée étant respectivement disposée en regard d'un patin desdits deux patins de soulèvement.

De cette manière, le débattement des patins de soulèvement est limité par ces butées lorsque la tranche d'une carte de transaction insérée dans le lecteur exerce une force de pression sur les patins de soulèvement Dans un mode de réalisation particulier, au moins un parmi l'élément d'obturation et l'élément de support comprend des moyens de protection aptes à limiter les frottements dudit volet de protection sur une puce disposée sur une carte de transaction, lors de l'insertion de ladite carte de transaction dans ladite fente d'insertion ou lors du retrait de ladite carte de transaction hors de ladite fente d'insertion.

De cette manière, les moyens de protection réduisent le risque d'arrachement de la puce d'une carte de transaction par frottement ou accrochage sur le volet de protection, en particulier lorsqu'une carte de transaction usée ou présentant un défaut de décollement de la puce est utilisée conjointement avec le système de lecture de carte de transaction.
Selon une caractéristique particulière de ce mode de réalisation, lesdits moyens de protection prennent la forme d'une zone chanfreinée et/ou d'une zone évidée au sein dudit au moins un parmi l'élément d'obturation et l'élément de support monobloc.

De cette manière, les moyens de protection de la puce sont particulièrement simples à mettre en œuvre.

Dans un mode de réalisation particulier l'élément de support monobloc comprend au moins une patte de soudure soudée audit lecteur de carte de transaction.

De cette manière, le volet de protection peut être assemblé de manière simple au lecteur de carte de transaction, par simple soudure.

Selon une caractéristique particulière de ce mode de réalisation, ladite au moins une patte de soudure est soudée sur un plan de masse dudit lecteur de carte de transaction.

De cette manière, l'élément de support monobloc forme une piste métallique apte à décharger l'énergie électrostatique potentiellement emmagasinée dans une carte de transaction lors de son introduction dans la fente d'insertion du lecteur, avant que cette carte n'entre en contact avec des composants électroniques sensibles du lecteur de carte. Ces composants électroniques sensibles sont ainsi protégés.

Dans un mode de réalisation particulier, l'élément d'obturation est soudé sur l'élément de support monobloc.

De cette manière, le montage solidaire de l'élément d'obturation sur l'élément de support monobloc est particulièrement simple à mettre en œuvre.

Les différents modes de réalisation mentionnés ci-dessus sont combinables entre eux pour la mise en œuvre de l'invention.

### Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
[Fig 1] présente une vue en perspective partielle d'un système de lecture de carte de transaction comprenant un lecteur de carte de transaction et un volet de protection, dans un mode de réalisation particulier de la technique proposée ;
[Fig 2] présente une vue en perspective d'un volet de protection, dans un mode de réalisation particulier de la technique proposée ;
[Fig 3] présente une autre vue en perspective du volet de protection de la figure 2, dans un mode de réalisation particulier de la technique proposée ;
[Fig 4] présente une vue en perspective partielle du système de lecture de carte de transaction de la figure 1, dans laquelle certaines pièces de la partie supérieure du lecteur sont non représentée ou sont représentée en transparence afin de faciliter la visualisation du volet de protection, dans un mode de réalisation particulier de la technique proposée ;
[Fig 5] est une vue en coupe tronquée d'un système de lecture de carte de transaction, selon le plan de coupe matérialisé par l'axe A-A présenté en relation avec la figure 4, dans un premier stade d'introduction d'une carte de transaction, dans un mode de réalisation particulier de la technique proposée ;
[Fig 6] reprend la vue en coupe tronquée d'un système de lecture de carte de transaction déjà représentée en figure 5, dans un deuxième stade d'introduction d'une carte de transaction, dans un mode de réalisation particulier de la technique proposée.

### Description détaillée de l'invention

Dans ce qui suit, les descriptions des figures sont réalisées par rapport à un référentiel orthonormal de type (O, x, y z). Les éléments qualifiés de « supérieurs » ont, par rapport à ce référentiel une altitude (z) supérieure aux éléments qualifiés « d'inférieurs ». Les notions de gauche et droite, et d'avant et d'arrière sont également à comprendre comme se référant à ce repère (O, x, y z). Ainsi la partie gauche du lecteur de carte de transaction est celle dont l'abscisse est la plus proche de O tandis que la partie droite du lecteur de carte de transaction est celle dont l'abscisse est la plus éloignée de O. La partie avant du lecteur de carte de transaction est celle dont l'ordonnée est la plus proche de O tandis la partie arrière du lecteur de carte de transaction est celle dont l'ordonnée est la plus éloignée de O. De même, la notion de verticalité est à comprendre comme se référant à la direction de l'axe z. Le même référentiel est utilisé pour la description des autres composants d'un système de lecture de carte de transaction selon la technique proposée, et notamment pour la description du volet de protection et des éléments qui le composent.

Dans toute la description, les éléments de même nature sont identifiés par une même référence numérique dans les figures.

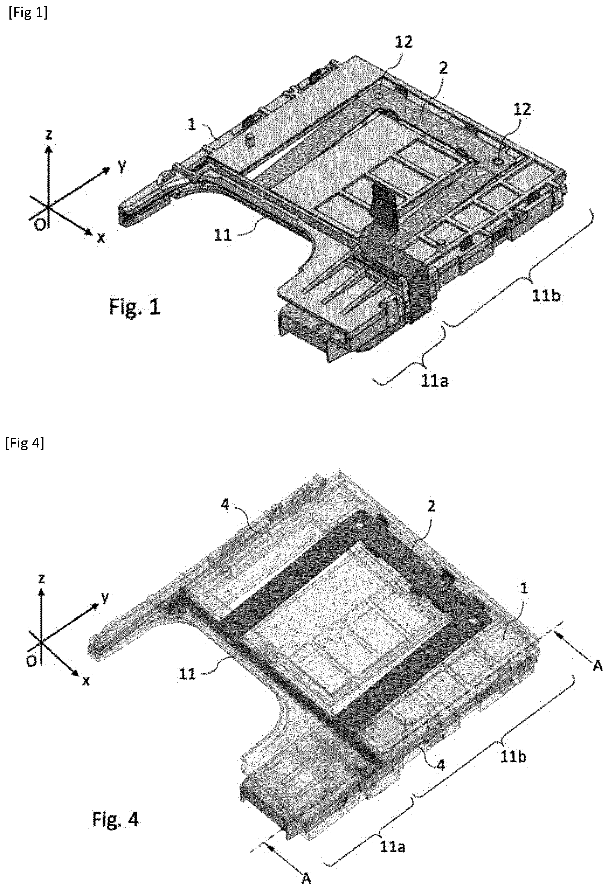

La présente invention se rapporte à un système de lecture de carte de transaction tel qu'illustré en relation avec la **figure 1****,** dans un mode de réalisation de la technique proposée. Un tel système de lecture de carte de transaction comprend :
- un lecteur de carte de transaction 1 comprenant une fente d'insertion 11 d'une carte de transaction ; et
- un volet de protection 2 mobile entre deux positions : une position fermée dans laquelle le volet de protection 2 obture ladite fente d'insertion 11, et une position ouverte dans laquelle le volet de protection 2 est disposé au moins en partie hors de ladite fente d'insertion 11.

Par « position fermée » et « obturation de la fente d'insertion », on entend ici que le volet de protection ferme l'accès à au moins une partie arrière 11b de la fente d'insertion 11. Cependant, comme cela est visible sur les figures 1 et 4, une partie avant lia de la fente d'insertion 11 peut rester accessible en permanence, y compris lorsque le volet de protection 2 est en position fermée, afin de permettre notamment d'initier le guidage d'une carte de transaction lorsque celle-ci commence à être engagée dans le lecteur. À l'inverse, en « position ouverte » le volet de protection est disposé au moins en partie hors de ladite fente d'insertion 11, dans un logement de réception aménagé à cet effet dans la partie supérieure du lecteur 1, de sorte que ce volet de protection n'entrave pas l'insertion complète d'une carte de transaction dans le lecteur (i.e. qu'il n'entrave pas son insertion y compris dans la partie 11b de la fente d'insertion 11).

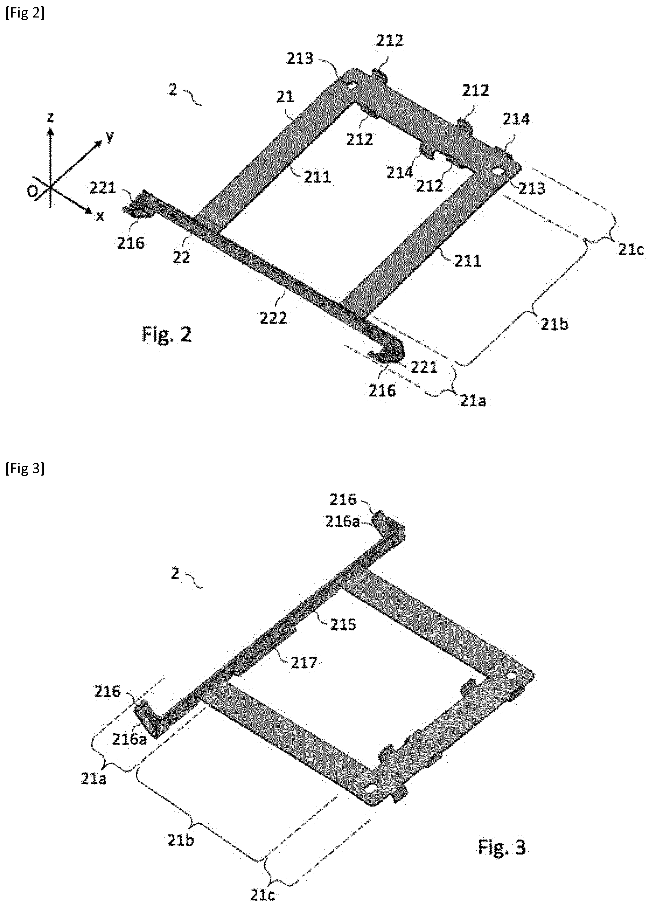

Le volet de protection 2 est conçu de manière à être compact, peu complexe, facile à assembler, simple et peu coûteux à produire. Un exemple d'un tel volet de protection est présenté seul (i.e. non monté dans un lecteur de carte de transaction) en relation avec les **figures 2 et 3****.** Selon le principe général de la technique proposée, le volet de protection 2 est formé de deux éléments distincts : un élément d'obturation 22 et un élément de support monobloc 21. L'élément d'obturation 22 est monté de manière solidaire sur l'élément de support monobloc 21. L'élément d'obturation 22 est conformé et dimensionné pour obturer la fente d'insertion d'un lecteur de carte de transaction au sein duquel le volet de protection 2 est monté, lorsque ce volet de protection 2 est dans la position fermée. Par exemple, l'élément d'obturation 22 est de forme sensiblement rectangulaire, avec une longueur sensiblement égale ou légèrement inférieure à la largeur de la fente d'insertion (dimension selon l'axe x), et une largeur sensiblement égale ou légèrement inférieure à la hauteur de la fente d'insertion (dimension selon l'axe z). Le volet de protection 2 s'étend dans la direction de l'axe x, perpendiculairement à la direction de l'axe y qui correspond à la direction d'introduction d'une carte de transaction dans la fente d'insertion 11. L'élément de support 21 est monobloc en ce qu'il est formé d'une seule pièce (et non pas par assemblage de plusieurs pièces). Cet élément de support 21 comprend au moins une portion élastiquement déformable 211, dont la fonction est de permettre le passage du volet de protection 2 de la position fermée à la position ouverte et inversement, lorsque le volet de protection est monté dans le lecteur de carte de transaction. Plus particulièrement, l'élément de support 21 est conçu dans un matériau qui rend la portion élastiquement déformable 211 apte à se déformer sous l'exercice d'une force de pression externe, puis à reprendre sa forme initiale correspondant à un état de repos lorsque ladite force de pression externe ne s'applique plus, sous l'effet d'une force de rappel élastique intrinsèque au matériau utilisé. Comme schématisé sur les figures 2 et 3, trois zones (21a, 21b et 21c) remplissant chacune des fonctions différentes peuvent être distinguées sur l'élément de support monobloc 21. La zone avant 21a de l'élément de support 21 définit une zone de support de l'élément d'obturation 22 : c'est dans cette zone que l'élément d'obturation 22 est fixé sur l'élément de support 21. La zone arrière 21c définit une zone de fixation de l'élément de support 21 au lecteur de carte de transaction 1. Enfin, la zone 21b est une zone intermédiaire située entre la zone avant de support 21a et la zone arrière de fixation 21c : cette zone 21b correspond à la portion élastiquement déformable 211 de l'élément de support 21. Ces différentes zones (21a, 21b et 21c) sont décrites plus en détails ci-après, dans un mode de réalisation de la technique proposée.

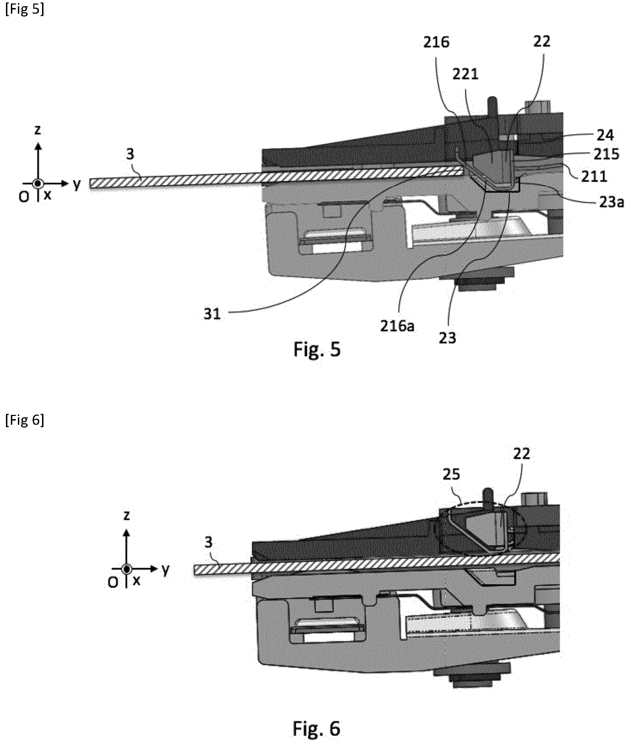

La zone de support 21a comprend une portion d'accueil 215 de l'élément d'obturation 22, s'étendant dans un plan vertical de direction définie par les axes (x ; z). C'est sur une face avant de cette portion d'accueil 215 que l'élément d'obturation 22 est monté de manière solidaire sur l'élément de support monobloc 21, par exemple par soudage en différents points de soudure ou par collage. Selon une caractéristique particulière, la portion d'accueil 215 a des dimensions sensiblement équivalentes à celles de l'élément d'obturation 22, ce qui permet de maximiser la surface de fixation de ces deux éléments et/ou de renforcer la rigidité de l'ensemble formé par ces deux éléments. Dans un mode de réalisation, la zone de support 21a comprend également au moins un patin de soulèvement 216, dont une partie 216a inclinée par rapport à la verticale fait saillie en avant de la portion d'accueil 215, et donc en avant de l'élément d'obturation 22 fixé sur la portion d'accueil 215. Un tel patin de soulèvement 216 est conformé et dimensionné de manière à ce que la partie inclinée 216a se trouve positionnée dans la fente d'insertion 11, en avant de l'élément d'obturation 22, lorsque le volet de protection 2 est monté dans le lecteur et qu'il est en position fermée. Selon une caractéristique particulière, et comme illustré sur l'exemple de volet de protection présenté sur les figures, l'élément de support monobloc 21 comprend deux patins de soulèvement 216 distants d'une distance sensiblement égale à la largeur de la fente d'insertion 11. Le rôle de ces patins de soulèvement ainsi que d'autres caractéristiques du volet de protection 2 et du lecteur de carte de transaction sont détaillés ultérieurement dans le présent document, en relation avec les figures 5 et 6 qui décrivent la cinématique d'insertion d'une carte de transaction dans un système de lecture de carte de transaction selon la technique proposée.

Comme décrit précédemment, la zone intermédiaire 21b correspond à la zone comprenant au moins une portion élastiquement déformable 211 de l'élément de support 21. Le volet de protection 2 illustré sur les figures comprend deux portions élastiquement déformables similaires 211, qui prennent la forme de deux lames reliant chacune la face arrière de la portion d'accueil 215 de la zone de support 21a à la zone de fixation 21c.

La zone de fixation 21c comprend des moyens de fixation du volet de protection 2 au lecteur de carte de transaction 1. Dans un mode de réalisation, ces moyens de fixation prennent la forme d'une ou plusieurs pattes de soudure 212 destinées à être soudées sur des zones correspondantes du lecteur, au niveau d'une zone arrière du lecteur. Selon une caractéristique particulière, ces pattes de soudure 212 sont notamment soudées sur une carte électronique (non représentée sur les figures) du lecteur. La zone de fixation 21c peut également comprendre, dans un mode de réalisation, un ou plusieurs trous de centrage 213 destinés à accueillir des pions de centrage 12 correspondants du lecteur (visibles sur la figure 1), de manière à assurer un montage précis et correct du volet de protection 2 au sein du lecteur. Éventuellement, dans un mode de réalisation, des pattes de clipsage 214 sont également prévues au niveau de la zone de fixation 21c : ces pattes de clipsage 214 peuvent être clipsées dans des logements correspondants du lecteur de manière à permettre un pré assemblage du volet de protection 2 dans le lecteur avant soudure des pattes de soudure 212.

Dans un mode de réalisation, l'élément de support monobloc 21 et l'élément d'obturation 22 sont formés à partir de plaques métalliques ou au moins partiellement métalliques. Selon une caractéristique particulière, l'élément d'obturation 22 prend par exemple la forme d'une lame métallique d'épaisseur supérieure à 0,35 millimètres. Une telle épaisseur permet en effet de conférer à l'élément d'obturation 22 une rigidité suffisante pour résister à l'insertion d'un objet indésirable dans la fente d'insertion du lecteur, lorsque le volet de protection est en position fermée. En d'autres termes, l'épaisseur de l'élément d'obturation 22 est telle qu'il n'est pas facile de le déformer. Par exemple, l'élément d'obturation 22 est formé dans une plaque de tôle métallique de 0,40 millimètres d'épaisseur. Selon une caractéristique particulière, l'élément de support monobloc est pour sa part formé dans une plaque métallique d'épaisseur inférieure à 0,30 millimètres. Cette épaisseur moindre (par rapport à celle de l'élément d'obturation) permet de conférer suffisamment de flexibilité à l'élément de support monobloc pour former la portion élastiquement déformable 211. Par exemple, l'élément de support monobloc 21 est formé dans une plaque de tôle métallique de 0,25 millimètres d'épaisseur. Ainsi, l'élément d'obturation 22 et l'élément de support 21 présentent tous deux l'avantage de pouvoir être produits simplement, à grande échelle et à moindre coût grâce à la mise en oeuvre de techniques connues de découpage, de pliage et d'embossage de plaques métalliques. Les patins de soulèvement 216, les pattes de soudure 212 et les pattes de clipsage 214 de l'élément de support 21 peuvent par exemple être obtenues facilement par simple pliage d'une plaque métallique préalablement découpée. En outre, le volet de protection ainsi obtenu est plus compact que les volets de protection de l'art antérieur (notamment en termes de volume mobilisé selon les axes x et z, pour le passage du volet de protection de la position fermée à la position ouverte et inversement), ce qui permet de mettre en oeuvre des systèmes de lecture de carte de transaction également plus compacts.

**La** **figure 4** montre le volet de protection 2 déjà décrit en relation avec les figures 2 et 3 positionné au sein d'un lecteur de carte de transaction 1 pour former un système de lecture de carte de transaction, dans un mode de réalisation de la technique proposée. Sur cette figure, certains éléments de la partie supérieure du lecteur sont représentés en transparence ou ne sont pas représentés, pour que le volet de protection 2, représenté en position fermée, soit mieux visible.

**Les** **figures 5 et 6** montrent une même vue en coupe tronquée d'un système de lecture de carte de transaction, dans un mode de réalisation particulier de la technique proposée. Cette vue en coupe est réalisée selon le plan de coupe matérialisé par l'axe A-A présenté en relation avec la figure 4. Plus particulièrement, les figures 5 et 6 montrent deux stades différents d'insertion d'une carte de transaction 3 dans le système de lecture de carte de transaction. Dans les configurations des figures 5 et 6, la carte de transaction 3 est une carte de dimension standard, adaptée à être utilisée dans le système de lecture représenté.

Dans la configuration illustrée en relation avec la figure 5, le volet de protection est en position fermée, et la carte de transaction 3 a été engagée dans la partie avant de la fente d'insertion du lecteur, et poussée jusqu'à ce que sa tranche avant 31 arrive au contact d'une face avant de la partie inclinée 216a des patins de soulèvement 216. Ce contact est réalisé car la carte de transaction 3 est de dimension standard, c'est à dire que sa largeur n'est que très légèrement inférieure à celle de la fente d'insertion. À ce stade, si l'utilisateur qui a engagé la carte de transaction 3 dans le lecteur continue d'exercer une pression visant à pousser la carte dans la fente d'insertion, la force de pression exercée par la carte 3 sur la partie inclinée 216a des patins de soulèvement 216 va entraîner le soulèvement progressif de ces patins, et incidemment de la portion d'accueil 215 et de l'élément d'obturation 22 vers un logement de réception 25 aménagé à cette fin dans la partie supérieure du lecteur, au-dessus de la fente d'insertion. Ce soulèvement est rendu possible par la déformation progressive de la portion élastiquement déformable 211, sous l'effet de la force de pression exercée par la carte sur les patins de soulèvement 216 et de la forme inclinée de partie 216a des patins. Selon une caractéristique particulière, l'élément d'obturation 22 comprend des butées 221 disposées en regard des patins de soulèvement 216, à l'arrière de ces patins, afin de limiter le débattement des patins de soulèvement 216 lors de l'exercice de ladite force de pression. Par exemple, comme illustré sur les figures 2 et 3, l'élément d'obturation comprend deux butées 221, chaque butée étant respectivement disposée en regard d'un des deux patins de soulèvement 216. Ces butées peuvent par exemple être obtenues facilement par simple pliage des extrémités de l'élément d'obturation 22, en particulier lorsque ce dernier est formé à partir d'une plaque métallique préalablement découpée.

À un certain point, si la force de pression visant à pousser la carte dans le lecteur est maintenue, l'ensemble formé par la portion d'accueil 215 et l'élément d'obturation 22 est suffisamment rentré dans son logement de réception 25 pour libérer l'accès au reste de la fente d'insertion (i.e. à la partie arrière de la fente d'insertion). Le volet de protection est alors maintenu en position ouverte par la force de réaction exercée par la face supérieure de la carte de transaction, qui s'oppose à la force de rappel élastique de la portion élastiquement déformable. La carte de transaction 3 peut alors être poussée plus en avant dans le lecteur, en glissant sous la zone de support de l'élément de support monobloc, jusqu'à finalement être insérée complètement dans le lecteur. Une telle configuration est illustrée en relation avec la figure 6. Selon une caractéristique particulière, au moins un parmi l'élément d'obturation 22 et l'élément de support comprend des moyens de protection aptes à limiter les frottements que le volet de protection pourrait exercer sur une puce disposée sur la face supérieure de la carte de transaction 3, lors de l'insertion ou du retrait de cette carte dans la fente d'insertion. Ces moyens de protection prennent par exemple la forme d'une zone chanfreinée 217 (visible sur la figure 3) et/ou d'une zone évidée 222 (visible sur la figure 2) au sein de l'élément d'obturation 22 et/ou de la portion d'accueil 215. Ces moyens de protection visent à éviter l'arrachement de la puce d'une carte de transaction par frottement ou accrochage sur le volet de protection, en particulier lorsqu'une carte de transaction usée ou présentant un défaut de décollement de la puce est utilisée conjointement avec le système de lecture de carte de transaction.

Lors du retrait de la carte de transaction 3 du lecteur de carte de transaction, le volet de protection bascule à nouveau dans sa position fermée, sous l'effet de la force de rappel élastique de la portion élastiquement déformable (la carte de transaction 3 n'étant plus présente pour exercer une force de réaction s'opposant à cette force de rappel élastique).

Selon une caractéristique particulière, lorsque l'élément de support monobloc est métallique (ou au moins partiellement métallique), les pattes de soudure (éléments 212 des figures 2 et 3) permettant la fixation du volet de protection au lecteur de carte de transaction sont avantageusement soudées à un plan de masse du lecteur de carte de transaction. Ainsi, le contact d'une carte de transaction avec les patins de soulèvement lors de l'introduction de la carte dans la fente d'insertion permet - par la piste métallique formée depuis ces patins de soulèvement jusqu'aux pattes de soudure via la portion élastiquement déformable - de décharger l'énergie électrostatique potentiellement emmagasinée dans la carte de transaction avant que cette carte n'entre en contact avec des composants électroniques sensibles du lecteur de carte (typiquement le connecteur de carte à puce du lecteur). Des rails métalliques disposés de part et d'autre de la fente d'insertion - afin de limiter l'usure due au frottement répété des tranches gauche et droite des cartes de transaction sur le lecteur - peuvent également assurer, de manière alternative ou complémentaire, une fonction similaire de décharge électrostatique d'une carte de transaction, en étant connectés au plan de masse du lecteur de carte de transaction, par exemple au moyen de pattes de soudure qui leur sont propres (de tels rails métalliques 4 sont notamment visibles sur la figure 4).

On s'intéresse maintenant au cas où c'est non plus une carte de transaction de dimension standard, adaptée à être utilisée dans le système de lecture, qui est introduite dans le lecteur, mais un objet quelconque de dimension autre, susceptible d'endommager le lecteur, par exemple une pièce de monnaie. Lors d'une tentative d'introduction d'un tel objet dans le lecteur, en général par le milieu de la fente d'insertion, cet objet n'entre pas en contact avec les patins de soulèvement 216 car ces derniers sont avantageusement disposés de chaque côté de la fente d'insertion, comme montré sur la figure 4. En effet, selon une caractéristique particulière déjà présentée en relation avec la description de la zone de support, l'élément de support monobloc comprend deux patins de soulèvement 216 distants d'une distance sensiblement égale (ou légèrement inférieure) à la largeur de la fente d'insertion 11, et donc sensiblement égale (ou légèrement inférieure) à la largeur d'une carte de transaction de dimension standard destinée à être utilisée conjointement avec le système de lecture de transaction. Cet espacement des deux patins permet donc de mettre en œuvre, dans une certaine mesure, une fonction de détection d'une carte de dimension standard : une telle carte engagée dans la fente d'insertion vient nécessairement au contact des deux patins de soulèvement 216, ce qui n'est en général pas le cas lors de l'introduction d'un objet quelconque. Les deux patins sont avantageusement de même largeur, et ils sont conformés (i.e. suffisamment étroits) et disposés de manière à entrer en contact avec des zones non embossées d'une carte de transaction standard introduite dans le lecteur, ce qui permet d'assurer que les deux patins se soulèvent en même temps et d'une hauteur sensiblement égale. En revanche, lors d'une tentative d'introduction d'un objet quelconque dans le lecteur, le volet de protection reste en position fermée en l'absence de force de pression exercée sur les patins de soulèvement 216. L'objet en question vient donc heurter l'élément d'obturation 22 qui s'oppose à son introduction dans la fente d'insertion 11. L'élément d'obturation 22 présente une rigidité suffisante lui permettant de ne pas se déformer, même en cas de pression significative exercée par l'objet sur cet élément d'obturation. Avantageusement, dans un mode de réalisation, le lecteur comprend dans sa partie inférieure, sous la fente d'insertion, une rainure 23 s'étendant dans la direction de l'axe x, dans laquelle vient reposer l'ensemble formé par la portion d'accueil 215 et l'élément d'obturation 22 lorsque le volet de protection est en position fermée (éventuellement, une précontrainte du volet de protection est mise en œuvre, de manière à garantir que l'ensemble formé par la portion d'accueil 215 et l'élément d'obturation repose bien au fond de la rainure 23, lorsque le volet de protection est en position fermée). La hauteur de l'ensemble formé par la portion d'accueil 215 et l'élément d'obturation 22 est supérieure à la profondeur de la rainure (dimensions selon l'axe z), de sorte que l'élément d'obturation 22 fait saillie au-dessus de cette rainure lorsque le volet de protection est en position fermée, ce qui permet de maintenir la fente d'insertion obturée. Cette rainure 23 comprend une paroi latérale verticale 23a qui forme une butée permettant de limiter le débattement de l'élément d'obturation 22, et qui s'oppose à la pression exercée par un objet que l'on tente d'introduire dans la fente d'insertion. Selon une caractéristique particulière, le logement de réception 25 comprend également au moins une paroi verticale 24 à l'aplomb de la paroi latérale 23a de la rainure 23. La hauteur de l'ensemble formé par la portion d'accueil 215 et l'élément d'obturation 22 est en outre dimensionnée de manière à ce que la partie supérieure de cet ensemble soit engagée au moins partiellement dans le logement de réception 25, même lorsque le volet de protection est en position fermée. Ainsi, la paroi latérale 23a de la rainure et l'au moins une paroi verticale 24 du logement de réception 25 coopèrent pour former respectivement une butée inférieure et une butée supérieure limitant le débattement de l'élément d'obturation 22 en cas de pression exercée par un objet que Ton tente d'introduire dans la fente d'insertion (dans la direction de l'axe y). Ainsi, l'élément d'obturation 22 en butée sur les parois 23a (dans sa partie inférieure) et 24 (dans sa partie supérieure) est apte à s'opposer de manière efficace à l'introduction d'un objet indésirable dans la fente d'insertion du lecteur, même en cas de force importante exercée par l'objet qu'un utilisateur tenterait d'insérer en force, et qui pourrait, en l'absence des butées 23 et 24 être de nature à tordre la portion élastiquement déformable 211.

## Revendications

1. Système de lecture de carte de transaction comprenant :
- un lecteur de carte de transaction (1) comprenant une fente d'insertion (11) d'une carte de transaction ; et
- un volet de protection (2) mobile entre deux positions : une position fermée dans laquelle le volet obture ladite fente d'insertion (11), et une position ouverte dans laquelle le volet est disposé au moins en partie hors de ladite fente d'insertion (11) ;
ledit système étant **caractérisé en ce que** le volet de protection (2) comprend un élément d'obturation (22) monté de manière solidaire sur un élément de support monobloc (21), ledit élément d'obturation (22) étant conformé et dimensionné pour obturer ladite fente d'insertion (11) dans ladite position fermée, ledit élément de support monobloc (21) comprenant au moins une portion élastiquement déformable (211) de sorte à permettre le passage de la position fermée à la position ouverte et inversement, ledit élément de support monobloc (21) étant en métal,
**caractérisé en ce que**
ledit élément d'obturation (22) est en métal,
ledit élément de support monobloc (21) comprend deux patins de soulèvement (216) sur lesquels une carte de transaction (3) exerce une force de pression, lorsque ladite carte de transaction (3) est introduite dans ladite fente d'insertion (11), entraînant la déformation de ladite au moins une portion élastiquement déformable (211), les deux patins (216) étant distants d'une distance sensiblement égale à la largeur de ladite fente d'insertion (11) de manière à mettre en œuvre une fonction de détection d'une carte de dimension standard.

2. Système de lecture de carte de transaction selon la revendication 1 **caractérisé en ce que** l'élément d'obturation (22) prend la forme d'une lame au moins partiellement métallique d'épaisseur supérieure à 0,35 mm et **en ce que** l'élément de support monobloc (21) est formé dans une plaque au moins partiellement métallique d'épaisseur inférieure à 0,30 mm.

3. Système de lecture de carte de transaction selon la revendication 1, **caractérisé en ce que** ledit élément d'obturation (22) comprend deux butées (221), chaque butée étant respectivement disposée en regard d'un patin (216) desdits deux patins de soulèvement.

4. Système de lecture de carte de transaction selon la revendication 1, **caractérisé en ce que** au moins un parmi l'élément d'obturation (22) et l'élément de support monobloc (21) comprend des moyens de protection (217, 222) aptes à limiter les frottements dudit volet de protection (2) sur une puce disposée sur une carte de transaction, lors de l'insertion de ladite carte de transaction (3) dans ladite fente d'insertion (11) ou lors du retrait de ladite carte (3) de transaction hors de ladite fente d'insertion (11).

5. Système de lecture de carte de transaction selon la revendication 4, **caractérisé en ce que** lesdits moyens de protection prennent la forme d'une zone chanfreinée (217) et/ou d'une zone évidée (222) au sein dudit au moins un parmi l'élément d'obturation (22) et l'élément de support monobloc (21).

6. Système de lecture de carte de transaction selon la revendication 1, **caractérisé en ce que** l'élément de support monobloc (21) comprend au moins une patte de soudure (212) soudée audit lecteur de carte de transaction (1).

7. Système de lecture de carte de transaction selon la revendication 6, **caractérisé en ce que** ladite au moins une patte de soudure (212) est soudée sur un plan de masse dudit lecteur de carte de transaction (1).

8. Système de lecture de carte de transaction selon la revendication 2, **caractérisé en ce que** l'élément d'obturation (22) est soudé sur l'élément de support monobloc (21).

## Patentansprüche

1. Transaktionskartenlesesystem, umfassend:
- ein Transaktionskartenlesegerät (1), das einen Einführungsschlitz (11) zum Einführen einer Transaktionskarte umfasst; und
- eine Schutzklappe (2), die zwischen zwei Positionen beweglich ist: einer geschlossenen Position, in der die Klappe den Einführungsschlitz (11) verschließt, und einer geöffneten Position, in der die Klappe wenigstens zum Teil außerhalb des Einführungsschlitzes (11) angeordnet ist;
wobei das System **dadurch gekennzeichnet ist, dass** die Schutzklappe (2) ein Verschließelement (22) umfasst, das auf einem einteiligen Trägerelement (21) fest montiert ist, wobei das Verschließelement (22) ausgebildet und dimensioniert ist, um den Einführungsschlitz (11) in der geschlossenen Position zu verschließen, wobei das einteilige Trägerelement (21) wenigstens einen elastisch verformbaren Teil (211) umfasst, um den Übergang aus der geschlossenen Position in die geöffnete Position und umgekehrt zu gestatten, wobei das einteilige Trägerelement (21) aus Metall ist, **dadurch gekennzeichnet, dass** das Verschließelement (22) aus Metall ist,
das einteilige Trägerelement (21) zwei Anhebeschuhe (216) umfasst, auf die eine Transaktionskarte (3) eine Anpresskraft ausübt, wenn die Transaktionskarte (3) in den Einführungsschlitz (11) eingeführt ist, was die Verformung des wenigstens einen elastisch verformbaren Teils (211) bewirkt, wobei die zwei Schuhe (216) um einen Abstand im Wesentlichen gleich der Breite des Einführungsschlitzes (11) beabstandet sind, um eine Funktion zum Detektieren einer Karte mit Standardabmessung auszuführen.

2. Transaktionskartenlesesystem nach Anspruch 1, **dadurch gekennzeichnet, dass** das Verschließelement (22) die Form einer wenigstens teilweise metallischen Zunge mit einer Dicke größer als 0,35 mm hat, und dadurch, dass das einteilige Trägerelement (21) in einer wenigstens teilweise metallischen Platte mit einer Dicke kleiner als 0,30 mm gebildet ist.

3. Transaktionskartenlesesystem nach Anspruch 1, **dadurch gekennzeichnet, dass** das Verschließelement (22) zwei Anschläge (221) umfasst, wobei jeder Anschlag jeweils einem Schuh (216) der zwei Anhebeschuhe gegenüber angeordnet ist.

4. Transaktionskartenlesesystem nach Anspruch 1, **dadurch gekennzeichnet, dass** wenigstens eines von dem Verschließelement (22) und dem einteiligen Trägerelement (21) Schutzmittel (217, 222) umfasst, die imstande sind, die Reibungen der Schutzklappe (2) auf einem Chip, der auf einer Transaktionskarte angeordnet ist, beim Einführen der Transaktionskarte (3) in den Einführungsschlitz (11) oder beim Herausziehen der Transaktionskarte (3) aus dem Einführungsschlitz (11) zu begrenzen.

5. Transaktionskartenlesesystem nach Anspruch 4, **dadurch gekennzeichnet, dass** die Schutzmittel die Form einer abgefasten Zone (217) und/oder einer ausgesparten Zone (222) in dem wenigstens einen von dem Verschließelement (22) und dem einteiligen Trägerelement (21) haben.

6. Transaktionskartenlesesystem nach Anspruch 1, **dadurch gekennzeichnet, dass** das einteilige Trägerelement (21) wenigstens eine Schweißlasche (212) umfasst, die an das Transaktionskartenlesegerät (1) geschweißt ist.

7. Transaktionskartenlesesystem nach Anspruch 6, **dadurch gekennzeichnet, dass** die wenigstens eine Schweißlasche (212) auf eine Masseebene des Transaktionskartenlesegeräts (1) geschweißt ist.

8. Transaktionskartenlesesystem nach Anspruch 2, **dadurch gekennzeichnet, dass** das Verschließelement (22) auf das einteilige Trägerelement (21) geschweißt ist.

## Claims

1. Payment card reading system comprising:
- a payment card reader (1) comprising an insertion slot (11) for inserting a payment card; and
- a protective flap (2) movable between two positions: a closed position in which the flap blocks said insertion slot (11), and an open position in which the flap is arranged at least partly outside the insertion slot (11);
said system being **characterised in that** the protective flap (2) comprises a blocking element (22) integrally mounted on a monobloc support element (21), said blocking element (22) being shaped and dimensioned to block said insertion slot (11) in said closed position, said monobloc support element (21) comprising at least one elastically deformable portion (211) so as to allow the passage from the closed position to the open position and vice versa, said monobloc support element (21) being made of metal,
**characterised in that**
said blocking element (22) is made of metal,
said monobloc support element (21) comprises two lifting pads (216) on which a payment card (3) exerts a pressure force, when said payment card (3) is introduced into said insertion slot (11), causing the deformation of said at least one elastically deformable portion (211), the two pads (216) being separated from each other by a distance substantially equal to the width of said insertion slot (11) so as to implement a function for detecting a card of standard dimensions.

2. Payment card reading system according to claim 1, **characterised in that** the blocking element (22) consists of a blade that is at least partially metallic of thickness greater than 0.35 mm and **in that** the monobloc support element (21) consists of a plate that is at least partially metallic of thickness less than 0.30 mm.

3. Payment card reading system according to claim 1, **characterised in that** said blocking element (22) comprises two stops (221), each stop being respectively arranged opposite a pad (216) of said two lifting pads.

4. Payment card reading system according to claim 1, **characterised in that** at least one from the blocking element (22) and the monobloc support element (21) comprises protective means (217, 222) adapted to limit the friction of said protective flap (2) on a chip arranged on a payment card, when inserting said payment card (3) in said insertion slot (11) or when withdrawing said payment card (3) from said insertion slot (11).

5. Payment card reading system according to claim 4, **characterised in that** said protective means consist of a chamfered zone (217) and/or a recessed zone (222) within said at least one from the blocking element (22) and the monobloc support element (21).

6. Payment card reading system according to claim 1, **characterised in that** the monobloc support element (21) comprises at least one solder pin (212) soldered to said payment card reader (1).

7. Payment card reading system according to claim 6, **characterised in that** said at least one solder pin (212) is soldered to a ground plane of said payment card reader (1).

8. Payment card reading system according to claim 2, **characterised in that** the blocking element (22) is soldered to the monobloc support element (21).
